(19) Europäisches Patentamt
European Patent Office
Office européen des brevets

(11) **EP 2 765 012 B1**

(12) **EUROPEAN PATENT SPECIFICATION**

(45) Date of publication and mention
of the grant of the patent:
**02.08.2017 Bulletin 2017/31**

(51) Int Cl.:
***B60C 11/12*** *(2006.01)*

(21) Application number: **12835412.3**

(22) Date of filing: **27.09.2012**

(86) International application number:
**PCT/JP2012/074952**

(87) International publication number:
**WO 2013/047691 (04.04.2013 Gazette 2013/14)**

(54) **PNEUMATIC TIRE TREAD**

LUFTREIFENPROFIL

BANDE DE ROULEMENT DE BANDAGE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2011 PCT/JP2011/072018**

(43) Date of publication of application:
**13.08.2014 Bulletin 2014/33**

(73) Proprietor: **Compagnie Générale des
Etablissements Michelin
63000 Clermont-Ferrand (FR)**

(72) Inventors:
• **KANEKO, Shuichi
Tokyo 1631073 (JP)**

• **TAKEHARA, Takeshi
Tokyo 1631073 (JP)**
• **ROTY, Gael
Tokyo 1631073 (JP)**

(74) Representative: **Regimbeau
20, rue de Chazelles
75847 Paris Cedex 17 (FR)**

(56) References cited:
**WO-A1-2007/142073     JP-A- H06 199 111
JP-A- 2000 289 413     JP-A- 2002 187 413
JP-A- 2006 062 469**

**Description**

Technical field

The present invention relates to a pneumatic tyre tread, and in particular relates to a pneumatic tyre tread for improving grip on a road surface having a low coefficient of friction, and to a pneumatic tyre furnished with such a tread.

Background art

Narrow incisions known as sipes are used to improve the grip performance of tyres, in particular the grip performance on road surfaces having a low coefficient of friction such as icy, snowy or wet road surfaces. Sipes open in ground-contacting surfaces of ground-contacting elements in the tread of the pneumatic tyre, such as blocks or ribs, and they improve the grip performance on such road surfaces by means of a so-called edge effect and by an effect whereby a water film on the road surface is removed. In many cases sipes are provided extending in the width direction of the tyre in order for the abovementioned edge effect and water film removing effect to be exhibited to the maximum extent.

As means for further improving the grip performance on road surfaces having a low coefficient of friction there is a known technique whereby the number (or density) of sipes provided in the ground-contacting elements is increased, improving the edge effect and the water film removing effect. However, if the number (or density) of sipes provided in a ground-contacting element is increased, the rigidity of the ground-contacting element deteriorates, as a result of which the amount of deformation of the ground-contacting element increases, causing the durability of the tread pattern to deteriorate.

Patent literature article 1 discloses a technique configured so as to achieve both grip performance on road surfaces having a low coefficient of friction and durability of the tread pattern, by forming small circular holes, opening in the ground-contacting surface, in blocks, which are ground-contacting elements.

Further, patent literature article 2 discloses a tread in which sipes extending in the width direction of the tyre and small holes are disposed in combination within a block, which is a ground-contacting element delimited by circumferential grooves and transverse grooves. The technique in patent literature article 2 is configured so as to achieve both grip performance on road surfaces having a low coefficient of friction and durability of the tread pattern by disposing only small holes in ground-contacting elements located in an edge region of the tread, disposing sipes and small holes in ground-contacting elements located in an intermediate region of the tread, and disposing only sipes in ground-contacting elements located in a central region of the tread.

Patent literature article 3 discloses a technique configured so as to achieve both grip performance on road surfaces having a low coefficient of friction and durability of the tread pattern, by providing in a block, which is a ground-contacting element, a plurality of relatively short, narrow incisions formed substantially in a V-shape, as illustrated in particular in Figure 2(b) thereof. In patent literature article 3, a plurality of sipe grooves (narrow incisions) having a sipe centre length in a range of 3.5 to 8.5 mm is disposed in a block.

Prior art literature

Patent literature

Patent literature article 1: Japanese Patent Kokai 1987-055202

Patent literature article 2: Japanese Patent Kokai 2007-210534

Patent literature article 3: Japanese Patent Kokai 2005-186827 JP2002-187413A discloses a tire provided with an auxiliary sipe having features of the preamble of the main claim.

Summary of the invention

Problems to be resolved by the invention

However, with the techniques disclosed in patent literature article 1 and patent literature article 2 there is a problem in that, when small holes are disposed in a block, if one tries to maintain a sipe density equivalent to that obtained when only sipes are employed, the ground-contacting surface area of the ground-contacting elements, which is an important factor in the grip performance on a road surface having a low coefficient of friction, is inevitably reduced, limiting the improvement in the grip performance on a road surface having a low coefficient of friction. In other words, there is a problem in that, in order to maintain the ground-contacting surface area of the ground-contacting elements using such small holes, the sipe density of the ground-contacting element must be lowered. Here, the sipe density is the sum of the projected lengths of the sipes and small holes in the ground-contacting element when projected onto a plane which is parallel to the axis of rotation of the tyre and is perpendicular to the ground-contacting surface, divided by the ground-contacting surface area not including the sipes and small holes in the ground-contacting element.

Further, with the technique disclosed in patent literature article 3 there is insufficient improvement in the grip performance on a road surface having a low coefficient of friction and in the durability of the tread pattern, and further improvements in these aspects of performance are being sought.

Accordingly, the present invention is intended to resolve the problems faced by the prior art described above, and its object is to provide a pneumatic tyre with which the grip performance on a road surface having a low coefficient of friction can be improved and tread pattern durability can be further improved.

Means of overcoming the problems

In order to achieve the abovementioned object, the present invention is a pneumatic tyre tread having at least one circumferential groove extending in the circumferential direction of the tyre, a plurality of transverse grooves extending in the transverse direction of the tyre, a plurality of ground-contacting elements demarcated by the circumferential grooves and the transverse grooves, transverse edges formed in the abovementioned ground-contacting elements by means of the abovementioned transverse grooves, and circumferential edges formed in the abovementioned ground-contacting elements by means of the abovementioned circumferential grooves, a plurality of incision elements being formed in the ground-contacting elements, the incision elements including at least one series of micro-incisions comprising at least two micro-incisions; the micro-incisions constituting the series of micro-incisions having one arcuate portion and two end portions formed in the ground-contacting surface of the tread, at least when the tyre being new, and opening to a width E in the ground-contacting surface of the tread, extending such that they do not open in either the circumferential grooves or the transverse grooves, the series of micro-incisions being formed at least in a region extending from one transverse edge of the ground-contacting element and having a length which being 25% of the mean length of the ground-contacting element measured in a direction parallel to the mean direction in which the abovementioned circumferential edges extend in the abovementioned ground-contacting element; one of the series of micro-incisions from among the plurality of incision elements formed in the same ground-contacting element being formed so as to be in closest proximity to the transverse edge, the micro-incisions constituting the series of micro-incisions having an incision length at most equal to 3.0 mm, the length, within the same ground-contacting element, of the ground-contacting surface between the mutually closest parts of micro-incisions constituting the series of micro-incisions is at least equal to 0.2 mm and at most equal to 1.2 mm.

Here, 'incision element' includes at least 'micro-incision', and may also include 'narrow incision' discussed hereinafter.

'A series of micro-incisions' refers to a plurality of micro-incisions arranged consecutively.

'Incision length' is the actual length of an incision, being the length along with the direction in which the micro-incision extends.

In the present invention configured as described above, with micro-incisions constituting a series of micro-incisions, the number of micro-incisions opening in the ground-contacting surface of the ground-contacting element can be increased compared with conventionally-known sipes, while the ground-contacting surface area of the ground-contacting element is maintained, and by extension the density of the micro-incisions can be increased, as a result of which grip performance on a road surface having a low coefficient of friction can be improved.

Further, in the present invention the incision length of the micro-incisions constituting the series of micro-incisions is short, being at most equal to 3.0 mm, and because they thus do not open readily when rolling, the rigidity of the ground-contacting element can be improved, and as a result tread pattern durability can be improved. When driving on a road surface covered with snow, having a low coefficient of friction, the micro-incisions do not readily open when rolling, and therefore a reduction in the edge effect or a reduction in the water film removing effect due to snow becoming caught within the micro-incisions can be prevented, and as a result grip performance can be improved in particular on a road surface covered in snow, having a low coefficient of friction. Such effects can be obtained more reliably by arranging that the micro-incisions constituting the series of micro-incisions do not open into the grooves, as in the present invention.

Further, in the present invention the series of micro-incisions is formed at least in a region extending from one transverse edge of the ground-contacting element and having a length which is 25% of the mean length of the ground-contacting element measured in a direction parallel to the mean direction in which the circumferential edges extend in the ground-contacting element, and therefore the edge effect and the water-removing effect of the micro-incisions can be effectively added while maintaining a high rigidity of the ground-contacting element in the vicinity of the transverse edge of the ground-contacting element, being the portion subjected to the greatest force when the tyre is rolling, and as a result grip performance on a road surface having a low coefficient of friction can be improved.

Further, one of the series of micro-incisions from among the plurality of incision elements formed in the same ground-contacting element is formed so as to be in closest proximity to the transverse edge, and therefore collapse of the ground-contacting element can be suppressed more effectively, and the water-removing effect due to the micro-incisions constituting the series of micro-incisions can be added while limiting the reduction in the ground-contacting surface area of the ground-contacting element.

Further, with regard to the micro-incisions constituting the series of micro-incisions formed so as to have one arcuate portion, at least when new, the edge of the arcuate portion can be oriented in various directions, further improving the edge effect due to the micro-incisions, and by this means the grip performance on a low-friction road surface can be improved. Also, because such micro-incisions have one arcuate portion, the ease with which the micro-incisions deform in response to the application of a force from a direction perpendicular to an imaginary straight line connecting the two end portions of the micro-incision can be decreased, and by this means the rigidity of a ground-contacting element having micro-incisions constituting a series of micro-incisions can be improved. As a result, the tread pattern durability can be improved. A similar increase in the resistance to deformation of the micro-incisions constituting the series of micro-incisions is also exhibited in relation to mould elements used to form such micro-incisions within a ground-contacting element, in particular during mould-stripping, the mould elements being resistant to deformation resulting from forces imparted by rubber (vulcanised rubber) in the mould elements used to form each micro-incision within the ground-contacting element, and as a result the productivity of treads having such micro-incisions constituting a series of micro-incisions can also be improved.

Further, the length, within the same ground-contacting element, of the ground-contacting surface between the mutually closest parts of adjacent micro-incisions, from among the micro-incisions constituting the abovementioned series of micro-incisions, is preferably at least equal to 0.2 mm and at most equal to 1.2 mm makes it possible to achieve improved tread pattern durability and grip performance on a road surface having a low coefficient of friction. To elaborate, if the length of the ground-contacting surface between the closest parts of micro-incisions constituting the abovementioned series of micro-incisions is less than 0.2 mm then the rigidity of the ground-contacting surface between adjacent micro-incisions is reduced, and tread pattern durability deteriorates. On the other hand, if the length of the ground-contacting surface between the closest parts of micro-incisions constituting the abovementioned series of micro-incisions is more than 1.2 mm then it becomes difficult to increase the number of micro-incisions and the density of the micro-incisions within a ground-contacting element, and grip performance on a road surface having a low coefficient of friction deteriorates. It should be noted that the 'length of the ground-contacting surface between the closest parts' refers to the shortest of any length between mutually adjacent micro-incisions in the series of

In the present invention, the directions in which imaginary straight lines connecting the two end portions of the micro-incisions constituting the series of micro-incisions extend are preferably parallel to the direction in which the one transverse edge extends, for all the micro-incisions in the series of micro-incisions within the same ground-contacting element.

In the present invention configured in this way, the edge effect and the water-removing effect of the micro-incisions can be more effectively added while maintaining a high rigidity of the ground-contacting element in the vicinity of the transverse edge of the ground-contacting element, being the portion subjected to the greatest force.

In the present invention, the directions in which imaginary straight lines connecting the two end portions of the micro-incisions constituting the series of micro-incisions extend are preferably parallel to each other for all the micro-incisions in the series of micro-incisions within the same ground-contacting element.

In the present invention configured in this way, the micro-incisions constituting the series of micro-incisions can be more efficiently arranged within the ground-contacting surface of the ground-contacting element, and therefore the number of micro-incisions in the ground-contacting element and/or the density of the micro-incisions can be increased efficiently, as a result of which grip performance on a road surface having a low coefficient of friction can be improved more reliably.

In the present invention, the incision length and the radius of the arc in the arcuate portion, in the micro-incisions constituting the series of micro-incisions, preferably satisfy the following relationship

```
(5 x incision length) - (3 x radius of arc) ≧ 3 (units: mm).
```

In the present invention configured in this way, mould elements used to form the micro-incisions constituting the series of micro-incisions within the ground-contacting element can be more reliably made resistant to deformation, during mould-stripping, resulting from forces imparted on the mould elements. To elaborate, if the abovementioned relationship between the incision length and the arc radius is not satisfied, there is a possibility that the mould elements used to form the micro-incisions constituting the series of micro-incisions within the ground-contacting element will not be able to resist the forces imparted during mould-stripping, causing them to buckle and thereby reducing the productivity. Therefore productivity can be improved if the micro-incisions constituting the series of micro-incisions are formed in such a way that the abovementioned relationship is satisfied.

In the present invention, the incision length and the width E at the tread surface, in the micro-incisions constituting the series of micro-incisions, preferably satisfy the following relationship

$$\text{Incision length} \; / \; \text{width E} \geqq 4.$$

In the present invention configured in this way, rigidity sufficient to improve the tread pattern durability can be maintained while the micro-incisions constituting the series of micro-incisions can be made to exhibit a micro-incision water film removing effect. To elaborate, if the abovementioned relationship between the incision length and the width E is not satisfied, then the micro-incisions constituting the series of micro-incisions become too resistant to deformation and it becomes more difficult for them to exhibit the micro-incision water film removing effect, and there is thus a danger that the grip performance on a road surface having a low coefficient of friction will deteriorate. Therefore grip performance on a road surface having a low coefficient of friction can be improved if the micro-incisions constituting the series of micro-incisions are formed in such a way that the abovementioned relationship between the incision length and the width E is satisfied.

In the present invention, a first projected length of the micro-incisions constituting the series of micro-incisions, projected onto a plane parallel to the direction of rotation of the tyre and perpendicular to the ground-contacting surface is preferably shorter than a second projected length projected onto a plane parallel to the axis of rotation of the tyre and perpendicular to the ground-contacting surface.

In the present invention configured in this way, the water film removing effect due to the micro-incisions can be maintained while maintaining the ground-contacting surface area of the ground-contacting element, and thus grip performance on a road surface having a low coefficient of friction can be improved.

In the present invention, the width E of the micro-incisions constituting the series of micro-incisions is preferably at most equal to 0.6 mm.

In the present invention, the radius of the arc in the arcuate portion of the micro-incisions constituting the series of micro-incisions is preferably at most equal to 3.0 mm.

In the present invention, the depth of the micro-incisions constituting the series of micro-incisions is preferably at least equal to 50% of the height of the ground-contacting element (or the depth of a groove which shapes the ground-contacting element).

In the present invention configured in this way it is possible for the grip performance on a road surface having a low coefficient of friction and the tread pattern durability resulting from the micro-incisions to be exhibited for a more prolonged period.

In the present invention the plurality of incision elements are preferably all micro-incisions.

In the present invention configured in this way, the number or density of micro-incisions which open in the ground-contacting surface of the ground-contacting element can be increased while maintaining the ground-contacting surface area of the ground-contacting element, and thus grip performance on a road surface having a low coefficient of friction can be improved.

In the present invention, the plurality of incision elements preferably includes a series of micro-incisions and one or a plurality of narrow incisions, and the series of micro-incisions is preferably at least formed between one transverse edge and the narrow incision within the same ground-contacting element.

Here, 'narrow incision' refers to an incision formed by a knife blade or the like, also known as a so-called sipe, the width of the narrow incision at the tread outer surface being relatively small compared predominantly with the transverse grooves (for example at most equal to 1.0 mm) .

In the present invention configured in this way, the overall rigidity of the ground-contacting element can be adjusted easily by means of one or a plurality of narrow incisions while maintaining a high rigidity of the ground-contacting element in the vicinity of the transverse edge of the ground-contacting element, being the portion subjected to the greatest force, and the ground-contacting element can be made to contact the ground more stably, and therefore grip performance on a road surface having a low coefficient of friction can be improved more effectively.

In the present invention, the directions in which the imaginary straight lines connecting the two end portions of the micro-incisions constituting the series of micro-incisions extend are preferably parallel to the mean direction in which the narrow incisions present within the same ground-contacting element extend.

In the present invention configured in this way, the grip performance on a road surface having a low coefficient of friction can be improved more reliably by means of a synergistic effect between the micro-incisions constituting the series of micro-incisions and other narrow incisions present within the ground-contacting element. Here, the 'mean direction in which a narrow incision extends' refers to the direction in which an imaginary straight line connecting both ends of the narrow incision extends.

Brief explanation of the figures

[Figure 1] is a drawing illustrating schematically a ground-contacting element in a pneumatic tyre tread according to a first mode of embodiment of the present invention.

[Figure 2] is an enlarged drawing illustrating schematically micro-incisions within a ground-contacting element in a pneumatic tyre tread according to the first mode of embodiment of the present invention.

[Figure 3] is a drawing illustrating schematically a ground-contacting element in a pneumatic tyre tread according to a second mode of embodiment of the present invention.

[Figure 4] is a drawing illustrating schematically a ground-contacting element in a pneumatic tyre tread according to a third mode of embodiment of the present invention.

[Figure 5] is a drawing illustrating schematically ground-contacting elements in pneumatic tyre treads according to the prior art.

Modes of embodying the invention

Preferred modes of embodiment of the present invention will now be described with reference to the drawings.

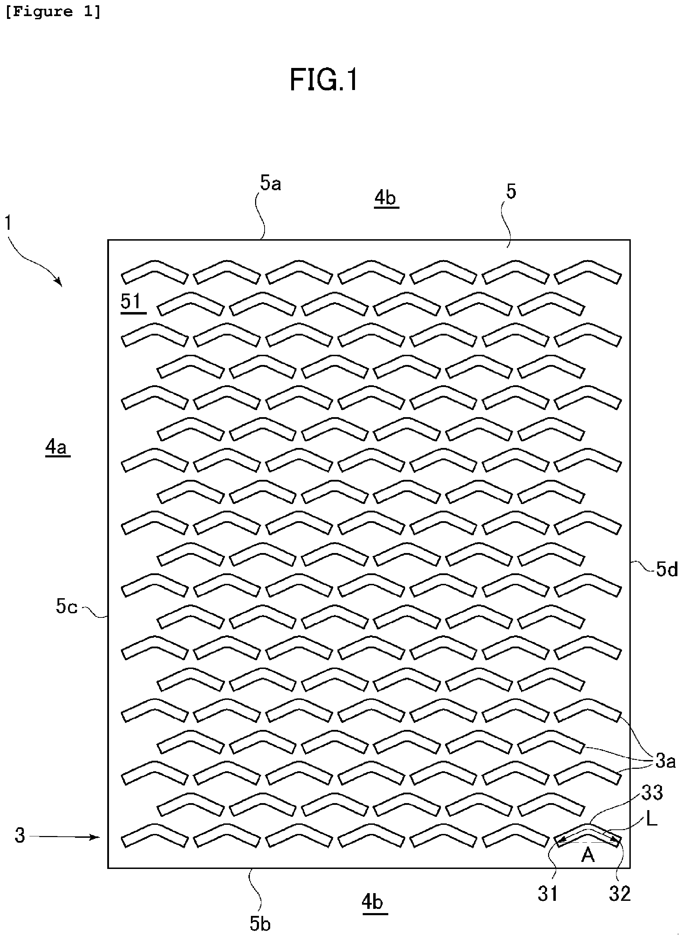

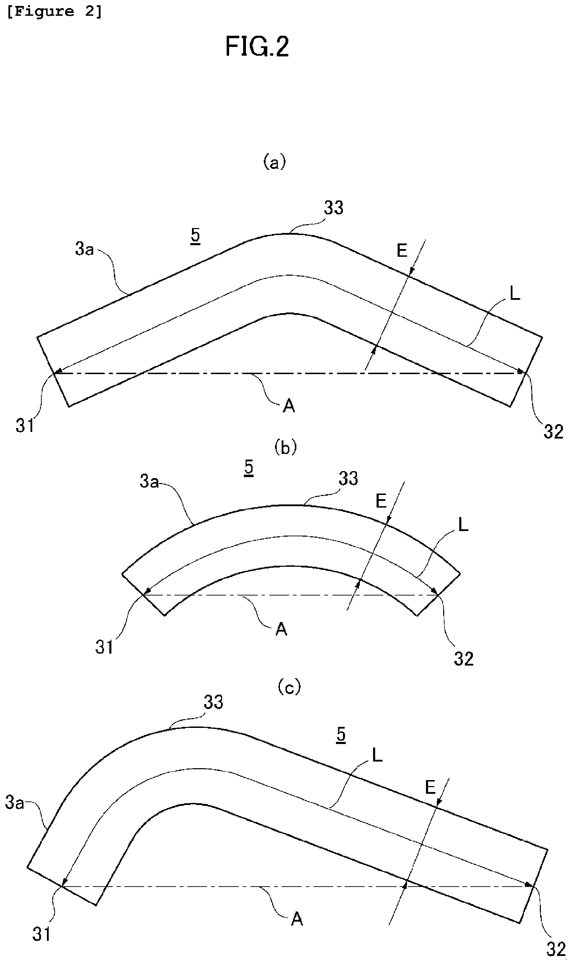

First, a pneumatic tyre tread according to a first mode of embodiment of the present invention will be described based on Figure 1 and Figure 2.

Figure 1 is a drawing illustrating schematically a ground-contacting element in a pneumatic tyre tread according to a first mode of embodiment of the present invention, and Figure 2 is an enlarged drawing illustrating schematically micro-incisions within a ground-contacting element in a pneumatic tyre tread according to the first mode of embodiment of the present invention.

First, as shown in Figure 1, reference number 1 indicates a pneumatic tyre tread 1 according to the first mode of embodiment.

A ground-contacting element (block) 5 demarcated by grooves 4 (circumferential grooves 4a and transverse grooves 4b) is formed in the tread 1. It should be noted that 'circumferential groove' refers to a groove which extends in the circumferential direction of the tyre, including not only straight grooves such as those illustrated in the drawing, but also grooves which extend around the whole tyre in the circumferential direction in a zigzag or wave-like fashion, and 'transverse groove' refers to a groove which extends in the width direction of the tyre, including those which extend obliquely relative to the width direction of the tyre. First and second transverse edges 5a, 5b, formed by demarcation by the transverse grooves 4b, and first and second circumferential edges 5c, 5d formed by demarcation by the circumferential grooves 4a are formed in the ground-contacting element 5.

Reference number 3 indicates a series of micro-incisions. The series of micro-incisions 3 consists of a plurality of micro-incisions 3a which are disposed such that they are aligned consecutively, substantially parallel to the transverse edge 5b (5a). As shown in Figure 1, in the present mode of embodiment a plurality of series of micro-incisions 3 is formed in the direction in which the circumferential edges 5c, 5d, on the sides facing the circumferential grooves 4a, extend. One series of micro-incisions 3 may comprise at least two aligned micro-incisions 3a.

Each micro-incision 3a is formed in such a way that it opens in a ground-contacting surface 51 of the ground-contacting element 5 of the tread 1 and does not open in the grooves 4. It should be noted that in the present mode of embodiment the plurality of micro-incisions 3a of the series of micro-incisions 3 are disposed such that they are aligned consecutively, substantially parallel to the transverse edge 5b (5a), but as a variant they may also be aligned consecutively at an angle (for example 5°) relative to the transverse edge 5b (5a).

Here, in the present mode of embodiment the series of micro-incisions 3 are disposed over substantially the whole of the ground-contacting surface 51 of the ground-contacting element 5, but it is sufficient for the series of micro-incisions 3 to be formed at least in a prescribed region in the vicinity of the second transverse edge 5b (or the first transverse edge 5a) of the ground-contacting element 5. This prescribed region is a region which extends from one transverse edge 5b (or 5a), and in the ground-contacting element 5 it is a region having a length which is 25% of the mean length of the ground-contacting element 5 (in the present mode of embodiment, the mean length of the ground-contacting element 5 in the circumferential direction of the tyre) as measured in a direction parallel to the circumferential edges 5c, 5d (in the example illustrated in Figure 1, this is a direction oriented within the ground-contacting element 5 from one transverse edge 5b (or 5a) toward the other transverse edge 5a (or 5b), coinciding with a direction perpendicular to the transverse edge 5b (or 5a)).

Here, the mean length of the ground-contacting element discussed hereinabove is determined by suitably defining a number of points and the locations thereof on the transverse edges (5a, 5b) to allow the mean length of the ground-contacting element (5) to be computed, and taking the mean value of the lengths corresponding to these points, as measured in a direction parallel to the circumferential edges (5c, 5d). The method of determining the 'mean length' is the same in the second and third modes of embodiment discussed hereinafter, and also in the variants discussed thereafter.

Next, as illustrated in Figure 2(a), the micro-incisions 3a constituting the series of micro-incisions 3 are formed such that they open in the ground-contacting surface 51 of the ground-contacting element 5 in substantially a V-shape, and comprise one arcuate portion 33 in the shape of an arc, formed approximately in the middle in the length direction, and two straight-line portions which extend to both sides from the arcuate portion 33. Each micro-incision 3a has two end portions 31, 32. As illustrated in Figure 1 and Figure 2(a), each micro-incision 3a has a length L (incision length) along its longitudinal direction (along with the direction in which the micro-incision 3a extends), from one end portion (31) to the other end portion (32). As shown in the drawing, in the present mode of embodiment the length L is the length along the midpoint of the width E of the micro-incision 3a.

Further, as shown in the drawing, the end portions 31, 32 and the arcuate portion 33 are disposed in such a way that an imaginary straight line A connecting the end portions 31, 32 does not touch the midline, indicated by L, except at the end portions 31, 32. In the present mode of embodiment, the configuration is such that the incision length L is at most equal to 3.0 mm. In the present mode of embodiment, the incision length of the micro-incision 3a is 2.1 mm, the width E of the micro-incision 3a is 0.4 mm, and the radius of the arc of the arcuate portion 33 is 2.0 mm. In the present mode of embodiment, all the micro-incisions 3a present in the ground-contacting element 5 illustrated in Figure 1 have the same length, width and arc radius as each other. Here, it is preferable that the width E of the micro-incision 3a is at most equal to 0.6 mm, the radius of its arc is at most equal to 3.0 mm, and its depth is at least equal to 50% of the height of the ground-contacting element 5.

Further, in the present mode of embodiment, the micro-incisions 3a constituting the series of micro-incisions 3 are formed in such a way that the incision length L and the radius of the arc in the arcuate portion 33 satisfy the following formula (1).

(5 x incision length L) - (3 x radius of arc) ≧ 3 ... Formula (1)

Here, in Formula (1) the units of the incision length L and the radius of the arc are 'mm'.

Further, the micro-incisions 3a constituting the series of micro-incisions 3 are formed in such a way that the incision length L and the width E at the tread surface (ground-contacting surface) satisfy the following formula (2).

Incision length L / width E ≧ 4 ... Formula (2)

Further, the micro-incisions 3a constituting the series of micro-incisions 3 are formed in such a way that their length in the direction of rotation of the tyre, projected onto a plane parallel to the direction of rotation of the tyre (the circumferential direction of the tyre) and perpendicular to the ground-contacting surface is shorter than the incision length in the axial direction of the tyre, projected onto a plane parallel to the axis of rotation of the tyre and perpendicular to the ground-contacting surface.

In the present mode of embodiment, the micro-incisions 3a constituting all the series of micro-incisions 3 present in the ground-contacting element 5 illustrated in Figure 1 are formed in such a way that imaginary straight lines A connecting the two end portions 31, 32 of each micro-incision 3a are parallel to the transverse edges 5a, 5b of the ground-contacting element 5 (the sides formed by the tread transverse grooves 4b).

Further, the configuration is such that the directions in which the imaginary straight lines A connecting the two end portions 31, 32 of the micro-incisions 3a constituting the series of micro-incisions 3 extend are parallel to each other, for each micro-incision 3a.

Further, the micro-incisions 3a constituting the series of micro-incisions 3 are disposed in such a way that the minimum distance between adjacent micro-incisions 3a is at least equal to 0.2 mm and at most equal to 1.2 mm. In the present mode of embodiment, this minimum distance is 0.4 mm. This minimum distance is the length on the ground-contacting surface (the clearance) between the mutually closest parts of mutually adjacent micro-incisions 3a constituting the series of micro-incisions 3. For example, in the present mode of embodiment, as shown in Figure 1, the closest separation between micro-incisions 3a located mutually adjacent in the width direction of the tread in a certain single series of micro-incisions 3 is between the end portion (31 or 32) of one of the micro-incisions 3a and the end portion (32 or 31) of the other micro-incision 3a, the series of micro-incisions 3 being configured by disposing each of the micro-incisions 3a in the ground-contacting element 5 such that the distance therebetween is 0.4 mm.

In this way, the micro-incisions 3a constituting the series of micro-incisions 3 in the present mode of embodiment have an incision length L that is at most equal to 3.0 mm, they have a shape a part of which is arcuate, and they are formed having an overall size that is minute in comparison with conventionally-known sipes.

In the present mode of embodiment formed in this way, firstly the length of the micro-incisions 3a constituting the series of micro-incisions 3 is short, and therefore the micro-incisions 3a are dimensionally resistant to opening and closing while the tyre is rolling. Therefore the action whereby the rigidity of the ground-contacting element is reduced is smaller than with other narrow incisions, and thus a high rigidity of the ground-contacting element can be preserved while maintaining the edge effect and the water-removing effect. Further, because of the minute overall size, micro-incisions 3a constituting a larger number of series of micro-incisions 3 can be disposed within a ground-contacting element having a prescribed ground-contacting surface area, as illustrated for example in Figure 1.

Further, because the shape includes an arc (the arcuate portion 33), the edges of the micro-incisions 3a constituting the series of micro-incisions 3 can be oriented in various directions, thereby further accentuating the edge effect due to the micro-incisions 3a, and thus the grip performance on a low-friction road surface can be improved. Moreover, because each micro-incision 3a is configured to have one arc within its shape, the micro-incisions 3a are resistant to deformation (resistant to opening and closing) in response to forces imparted to the micro-incision from a direction perpendicular to an imaginary straight line A connecting the two ends 31, 32 of the micro-incision 3a. By this means the rigidity of a ground-contacting element 5 having micro-incisions 3a can be improved more reliably, and as a result the tread pattern durability can be improved.

Further, a similar increase in the resistance to deformation of the micro-incisions 3a constituting the series of micro-incisions 3 is also exhibited in relation to mould elements (for example blade-shaped mould elements/ blades) used to form such micro-incisions 3 within the ground-contacting element 5. In other words, in particular during mould-stripping in the manufacture of the tyre, it is possible to suppress deformation of the mould elements in response to forces imparted to such mould elements from the rubber (vulcanised rubber) constituting the ground-contacting elements. In particular, if the relationship in Formula (1) discussed hereinabove is not satisfied, there is a possibility that the mould elements used to form the micro-incisions constituting the series of mould elements within the ground-contacting element will not be able to resist the forces imparted during mould-stripping, causing them to buckle and thereby reducing the productivity. Therefore the productivity can also be improved when the tread 1 according to the present mode of embodiment is being manufactured. In other words, when arrangements are made such that the rigidity of the ground-contacting element 5 is maintained by using the micro-incisions 3a constituting the series of micro-incisions 3 according to a mode of embodiment of the present invention, it is possible to increase the density of the micro-incisions 3a while maintaining the ground-contacting surface area of the ground-contacting element 5, and therefore grip performance on a road surface having a low coefficient of friction can be further improved while maintaining the durability of the tread 1.

Next, as illustrated in Figure 2, the shape of the micro-incisions 3a constituting the series of micro-incisions 3 is not limited to one having substantially a V-shape comprising one arc 33 and two straight lines extending from the arc 33, as in the present mode of embodiment (Figure 2(a)), but it may also be a shape comprising only a single arc 33, as illustrated in Figure 2(b), or it may consist of one arc 33 and two straight lines of different lengths extending from the arc 33, as illustrated in Figure 2(c). Each micro-incision 3a has two end portions 31, 32 and a width E. In the present mode of embodiment, the incision length L of the micro-incisions 3a constituting the series of micro-incisions 3 is 2.1 mm in Figure 2 (a) and Figure 2(c), and 1.5 mm in Figure 2(b), and the width E of each micro-incision 3a is 0.4 mm in Figure 2(a) and Figure 2(c), and 0.3 mm in Figure 2(b).

As illustrated in the present mode of embodiment, each micro-incision 3a has a short length L, as discussed hereinabove, and it is therefore not preferable for them to be formed with two or more arcs, as this would result in a reduction in the productivity of the mould element used to form such micro-incisions 3a constituting the series of micro-incisions 3, and is thus preferable for the micro-incisions to have a single arc, irrespective of whether or not straight lines extend from the arc.

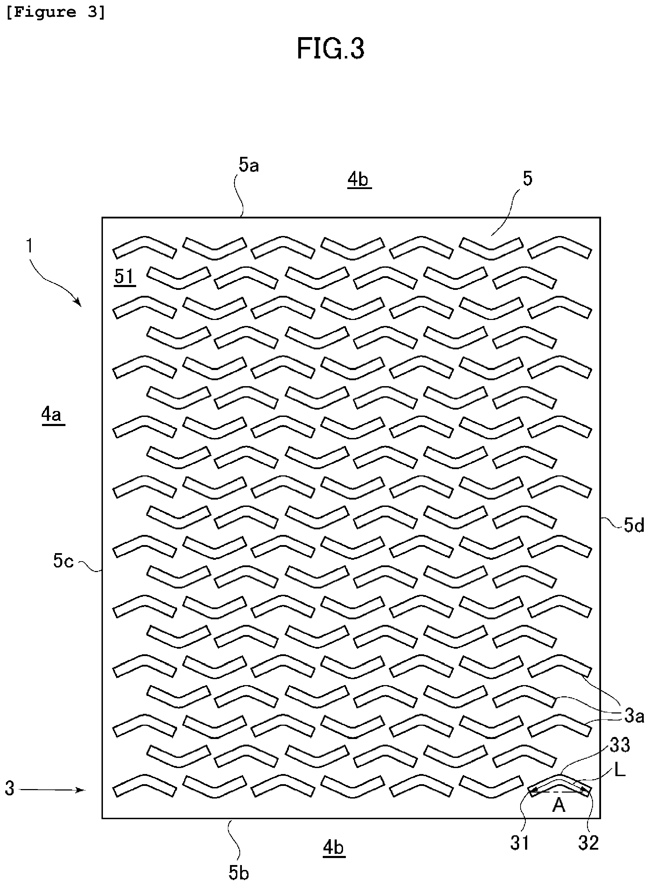

Next, a pneumatic tyre tread according to a second mode of embodiment of the present invention will be described based on Figure 3. Figure 3 is a drawing illustrating schematically a ground-contacting element in a pneumatic tyre tread according to the second mode of embodiment of the present invention.

As illustrated in Figure 3, a ground-contacting element (block) 5 demarcated by grooves 4 is formed in a tread 1 of the second mode of embodiment, in the same way as in the first mode of embodiment discussed hereinabove. In the ground-contacting element 5 in the second mode of embodiment, the configuration is such that the orientation of the substantially V-shape switches alternately in the width direction of the tyre and the circumferential direction of the tyre. In the present mode of embodiment also, the series of micro-incisions 3 are disposed over substantially the whole of the ground-contacting element 5, but it is sufficient for the series of micro-incisions 3 to be formed at least in a prescribed region in the vicinity of one of the transverse edges (for example the second transverse edge 5b) of the ground-contacting element 5, in the same way as in the first mode of embodiment discussed hereinabove.

The micro-incisions 3a constituting the series of micro-incisions 3 are formed in such a way that they open in a ground-contacting surface 51 of the ground-contacting element 5 of the pneumatic tyre tread 1 and do not open in the grooves 4, in the same way as in the first mode of embodiment. Further, the configuration is such that the directions in which imaginary straight lines A connecting the respective two end portions 31, 32 of each of the micro-incisions 3a constituting each series of micro-incisions 3 extend are parallel to each other and are parallel to the transverse edges 5a, 5b of the ground-contacting element 5 (the sides facing the transverse grooves 4b). It should be noted that the configuration of the shape of the actual micro-incisions 3a constituting the series of micro-incisions 3 in the second mode of embodiment is the same as in the first mode of embodiment discussed hereinabove, and therefore a description thereof is omitted here.

Although the directions in which the micro-incisions 3a constituting the series of micro-incisions 3 are disposed are switched in this way, a high micro-incision density and a high ground-contacting element rigidity can be achieved together in the same way as in the first mode of embodiment. Further, not only can the orientation of the substantially V-shaped micro-incisions constituting the series of micro-incisions 3 be changed, but also, in the ground-contacting element 5, a plurality of series of micro-incisions 3 having micro-incisions comprising other shapes (for example the shapes illustrated in Figure 2(b) or Figure 2(c)), or having micro-incisions combined with conventional, relatively long narrow incisions can also be formed in the ground-contacting element 5.

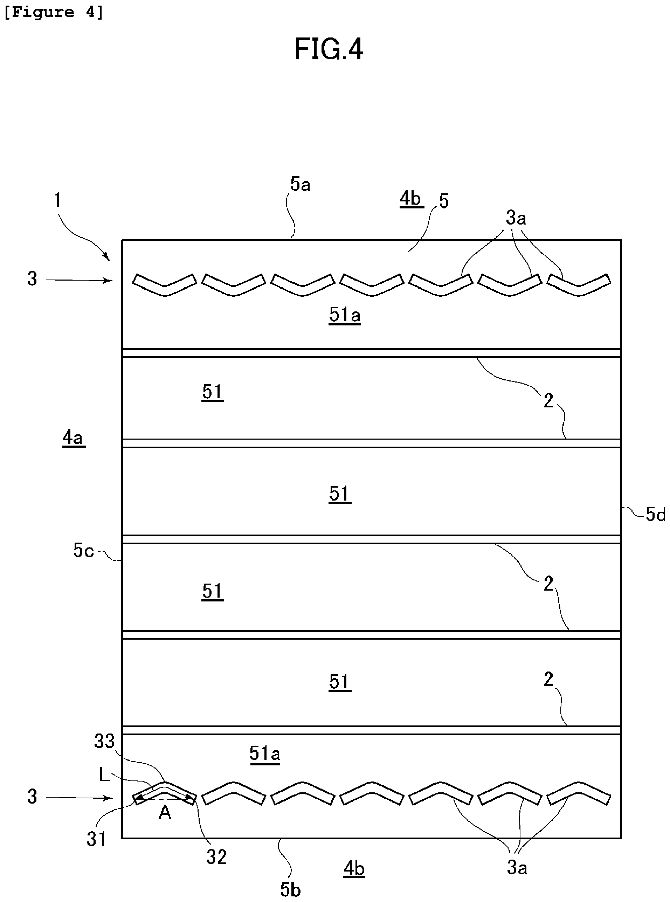

Next, a pneumatic tyre tread according to a third mode of embodiment of the present invention will be described based on Figure 4. Figure 4 is a drawing illustrating schematically a ground-contacting element in a pneumatic tyre tread according to the third mode of embodiment of the present invention.

As illustrated in Figure 4, a ground-contacting element (block) 5 demarcated by grooves 4 is formed in a tread 1 of the third mode of embodiment, in the same way as in the first and second modes of embodiment discussed hereinabove. Five narrow incisions 2 are formed in the ground-contacting element 5 in this third mode of embodiment in such a way that they open in the ground-contacting surface 51 of the ground-contacting element 5 of the tread 1, and open at both ends into the circumferential edges 5c, 5d (the sides formed by the tread circumferential grooves 4a) on both sides of the ground-contacting element 5. Further, these narrow incisions 2 are disposed in such a way that they divide the sides of the circumferential edges 5c, 5d of the ground-contacting element 5 (the length of the ground-contacting element 5 in the circumferential direction of the tyre, from one transverse edge 5a (5b) toward the other transverse edge 5b (5a)) substantially equally.

In the present mode of embodiment, one series of micro-incisions 3 is formed respectively in each of two ground-contacting surfaces 51a containing the transverse edges 5a, 5b of the ground-contacting element 5, from among six ground-contacting elements 51 which are divided by means of the five narrow incisions 2. More specifically, micro-incisions 3a constituting series of micro-incisions 3 having the same shape as in the first mode of embodiment discussed hereinabove are formed only in regions extending respectively from the first transverse edge 5a and the second transverse edge 5b, being regions having a length which is 25% of the mean length of the ground-contacting element 5 measured in a direction parallel to the circumferential edges 5c, 5d of the ground-contacting element 5.

The micro-incisions 3a constituting the series of micro-incisions 3 are formed in such a way that they open in substantially a V-shape in the ground-contacting surface 51a and do not open in the grooves 4 or the narrow incisions 2. The configuration is such that the direction in which imaginary straight lines A connecting the two end portions 31, 32 of the micro-incisions 3a extend is parallel to the direction in which imaginary straight lines connecting the end portions of the narrow incisions 2 extend (in the example illustrated in Figure 4, a direction which coincides with the direction in which the straight narrow incisions 2 extend). Further, if the narrow incisions 2 extend at mutually different angles, the directions in which the imaginary straight lines A connecting the two end portions 31, 32 of the micro-incisions 3a constituting the series of micro-incisions 3 extend should be parallel to the mean direction in which the narrow incisions 2 extend.

Further, the configuration is such that the directions in which the imaginary straight lines connecting the two end portions 31, 32 of the micro-incisions 3a extend are substantially parallel to the transverse edges 5a, 5b of the respective ground-contacting surfaces 51a.

It should be noted that the configuration of the shape of the actual micro-incisions 3a constituting the series of micro-incisions 3 in the third mode of embodiment is the same as in the first mode of embodiment discussed hereinabove, and therefore a description thereof is omitted here.

In the present mode of embodiment, micro-incisions 3a constituting series of micro-incisions 3 are provided only in the end portions (ground-contacting surfaces 51a) of the ground-contacting element (block) 5, being the portions subjected to the greatest force when the tyre is rolling, more specifically regions extending from the first and second transverse edges 5b, 5a, being regions having a length which is 25% of the mean length of the ground-contacting element 5 measured in a direction oriented toward the other transverse edge 5a, 5b within the same ground-contacting element 5, and therefore the edge effect and water-removing effect of the micro-incisions 3a can be effectively added to the ground-contacting element 5 while other functions, for example an improved, higher tread pattern durability, are allocated to other sections. Also in the present mode of embodiment, as in the second mode of embodiment, the orientation of the substantially V-shaped micro-incisions 3a constituting the series of micro-incisions 3 can be switched, or they can be used at the same time as micro-incisions having other shapes.

It should be noted that in the first to third modes of embodiment discussed hereinabove, examples were described in which the ground-contacting element 5 has a rectangular shape, but other shapes may also be used as variants. For example, the series of micro-incisions 3 discussed hereinabove can also be applied if the transverse grooves 4b are formed such that they extend at an angle relative to the width direction of the tyre, with the transverse edges extending obliquely. Further, the ground-contacting element 5 may also be a ground-contacting element having transverse edges that are not a single straight line, as illustrated in the drawings, but are for example edges comprising a plurality of straight sides, edges comprising an arc-shaped side, edges comprising a combination of one or a plurality of straight sides and arc-shaped sides, or edges comprising undulating sides. Similarly, the ground-contacting element 5 may have circumferential edges that are edges comprising a plurality of straight sides, as discussed hereinabove, or edges comprising arc-shaped sides, for example. Further, the two circumferential edges do not need to be parallel to each other.

In the case of such variants, the 'mean length' discussed hereinabove is measured in the mean direction in which the circumferential edges extend. For example, in a case in which the two circumferential edges (5c, 5d in the example shown in the drawings) are not parallel to each other, the measurement is made in the mean direction in which they extend. Further, in cases in which the circumferential edges comprise a plurality of straight sides, or the circumferential edges comprise an arc-shaped side, the measurement is made in the mean direction in which they extend. It should be noted that in a case in which the 2 circumferential edges comprise such circumferential edges and in which the circumferential edges are not parallel to each other, the direction is the mean of the respective mean directions in which the circumferential edges extend. Further, the number of points and the locations thereof on the transverse edges to allow the mean length to be computed, discussed hereinabove, are set in particular according to the shape of the sides of the transverse edges, and the mean length is determined, as discussed hereinabove.

Further, the 'series of micro-incisions' is not limited to being aligned in a row, but may also be aligned in a staggered manner.

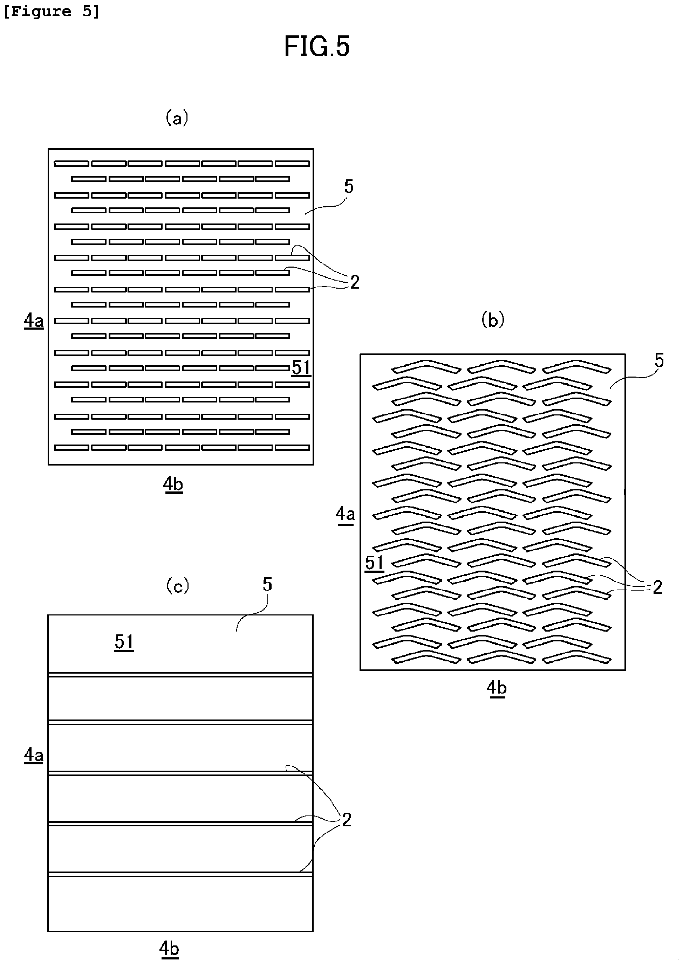

Next, in order to clarify further the effects of the modes of embodiment of the present invention, an explanation will now be given of the results of tests performed using simulations (finite element method) conducted using commercially available computer software, to verify various characteristics of a ground-contacting element of a pneumatic tyre tread provided with micro-incisions constituting a series of micro-incisions 3 according an embodiment 1 of the present invention (see Figure 1), and of ground-contacting elements according to a conventional example, provided with conventional straight narrow incisions 2 (see Figure 5(c)), according to a comparative example 1 provided with relatively short narrow incisions 2 (the incision length being longer than the incision length L (at most equal to 3 mm) discussed hereinabove) (see Figure 5 (b)), and according to a comparative example 2 provided with narrow incisions 2 formed from straight incisions (having an incision length which is the same as the incision length L discussed hereinabove, but being straight) (see Figure 5(a)).

The size of the ground-contacting element (block) model according to the conventional example, the comparative examples and embodiment 1 was in each case a rectangular block having a short side of length 22 mm, a long side of length 27 mm and a height of 9 mm, formed using the same rubber-based material, the narrow incisions in the conventional example and the comparative examples, and the micro-incisions in embodiment 1 each having a width of 0.4 mm and depth of 7 mm and opening in a surface corresponding to the ground-contacting surface of the ground-contacting element (block). It should be noted that embodiment 1 used a ground-contacting element (block) model corresponding to Figure 1, the conventional example used a ground-contacting element (block) model corresponding to Figure 5(c), comparative example 1 used a ground-contacting element (block) model corresponding to Figure 5(b), and comparative example 2 used a ground-contacting element (block) model corresponding to Figure 5(a).

The abovementioned ground-contacting element (block) models were all subjected to appropriate loading, and calculations were performed to obtain the density of the narrow incisions or the like, by finding the sum of the respective incision lengths of the narrow incisions or the micro-incisions constituting the series of micro-incisions as projected onto a plane parallel to the short side of the ground-contacting element (block) model, and dividing this by the ground-contacting surface area with no narrow incisions or the like provided, expressed as the product of the length of the short side of the ground-contacting element (block) model and the length of the long side thereof; and the actual ground-contacting surface area proportion, obtained by dividing the surface area of the narrow incisions or the like in the ground-contacting surface of the ground-contacting element (block) model, by the ground-contacting surface area of the ground-contacting element (block) with no narrow incisions or the like provided. Further, a 1 mm shear force was applied in a direction parallel to the long side of the ground-contacting element (block) model, and the rigidity of each ground-contacting element (block) model was obtained. The abovementioned calculated values were expressed as indices, with the conventional example set to 100, and with larger numbers being more satisfactory.

[Table 1]

|  | Embodiment 1 | Conventional example | Comparative example 1 | Comparative example 2 |
|---|---|---|---|---|
| Density of narrow incisions or the like | 169 | 100 | 169 | 169 |
| Actual ground-contacting surface area proportion | 100 | 100 | 100 | 99 |
| Rigidity | 110 | 100 | 90 | 103 |

As shown in Table 1, it can be confirmed that the embodiment product can achieve a higher rigidity while maintaining a density of narrow incisions or the like and an actual ground-contacting surface area proportion that are equal to or higher than those of the conventional example and comparative examples 1, 2. In other words, this means that if the rigidity of the embodiment product is equivalent to the rigidity of the conventional product, a higher density of narrow incisions or the like and a higher actual ground-contacting surface area proportion can be achieved.

Explanation of the reference numbers

[0081]

1 Pneumatic tyre tread

2 Narrow incision

3 Series of micro-incisions

3a Micro-incision

31, 32 End portion of micro-incision

33 Arcuate portion of micro-incision

4a Circumferential groove of tyre

4b Transverse groove of tyre

5 Ground-contacting element

51 Ground-contacting surface of ground-contacting element

A Imaginary straight line connecting both end portions of micro-incision

L Actual length of micro-incision / Midline of micro-incision in width direction

**Claims**

1. Pneumatic tyre tread (1) having at least one circumferential groove (4a) extending in the circumferential direction of the tyre, a plurality of transverse grooves (4b) extending in the transverse direction of the tyre, a plurality of ground-contacting elements (5) demarcated by the circumferential grooves (4a) and the transverse grooves (4b), transverse edges (5a, 5b) formed in the abovementioned ground-contacting elements (5) by means of the abovementioned transverse grooves (4b), and circumferential edges (5c, 5d) formed in the abovementioned ground-contacting elements (5) by means of the abovementioned circumferential grooves (4a),

a plurality of incision elements being formed in the abovementioned ground-contacting elements (5), the incision elements including at least one series of micro-incisions (3) comprising at least two micro-incisions (3a),

the micro-incisions (3a) constituting the abovementioned series of micro-incisions (3) having one arcuate portion (33) and two end portions (31, 32) formed in the ground-contacting surface of the abovementioned tread (1), at least when the tyre being new, and opening to a width E in the ground-contacting surface of the abovementioned tread (1), extending such that they do not open in either the abovementioned circumferential grooves (4a) or the abovementioned transverse grooves (4b),

the abovementioned series of micro-incisions (3) being formed at least in a region extending from one transverse edge (5a, 5b) of the abovementioned ground-contacting element (5) and having a length which being 25% of the mean length of the ground-contacting element (5) measured in a direction parallel to the mean direction in which the abovementioned circumferential edges (5c, 5d) extend in the abovementioned ground-contacting element (5),

one of the abovementioned series of micro-incisions (3) from among the plurality of incision elements formed in the abovementioned same ground-contacting element (5) being formed so as to be in closest proximity to the transverse edge (5a, 5b),

the micro-incisions (3a) constituting the abovementioned series of micro-incisions (3) having an incision length at most equal to 3.0 mm,

the tread being **characterized in that**

the length, within the same ground-contacting element (5), of the ground-contacting surface between the mutually closest parts of micro-incisions (3a) constituting the abovementioned series of micro-incisions (3) is at least equal to 0.2 mm and at most equal to 1.2 mm.

2. Pneumatic tyre tread (1) according to Claim 1, **characterised in that** the directions in which imaginary straight lines connecting the two end portions (31, 32) of the micro-incisions (3a) constituting the abovementioned series of micro-incisions (3) extend are parallel to the direction in which the abovementioned one of the transverse edges (5a, 5b) extends, for all the micro-incisions (3a) in the series of micro-incisions (3) within the same ground-contacting element (5).

3. Pneumatic tyre tread (1) according to Claim 1 or Claim 2, **characterised in that** the directions in which an imaginary straight lines connecting the two end portions (31, 32) of the micro-incisions (3a) constituting the abovementioned series of micro-incisions (3) extend are parallel to each other for all the micro-incisions (3a) in the series of micro-incisions (3) within the same ground-contacting element (5).

4. Pneumatic tyre tread (1) according to any one of Claims 1 to 3, **characterised in that** the abovementioned incision length and the radius of the arc in the abovementioned arcuate portion (33), in the micro-incisions (3a) constituting the abovementioned series of micro-incisions (3), satisfy the following relationship

```
(5 x incision length) - (3 x radius of arc) ≧ 3 (units: mm).
```

5. Pneumatic tyre tread (1) according to any one of Claims 1 to 4, **characterised in that** the abovementioned incision length and the width E on the abovementioned tread surface, in the micro-incisions (3a) constituting the abovementioned series of micro-incisions (3), satisfy the following relationship

```
Incision length / width E ≧ 4.
```

6. Pneumatic tyre tread (1) according to any one of Claims 1 to 5, **characterised in that** a first projected length of the micro-incisions (3a) constituting the abovementioned series of micro-incisions (3), projected onto a plane parallel to the direction of rotation of the tyre and perpendicular to the abovementioned ground-contacting surface is shorter than a second projected length projected onto a plane parallel to the axis of rotation of the tyre and perpendicular to the ground-contacting surface.

7. Pneumatic tyre tread (1) according to any one of Claims 1 to 6, **characterised in that** the width E of the micro-incisions (3a) constituting the abovementioned series of micro-incisions (3) is at most equal to 0.6 mm.

8. Pneumatic tyre tread (1) according to any one of Claims 1 to 7, **characterised in that** the radius of the arc in the arcuate portion (33) of the micro-incisions (3a) constituting the abovementioned series of micro-incisions (3) is at most equal to 3.0 mm.

9. Pneumatic tyre tread (1) according to any one of Claims 1 to 8, **characterised in that** a depth of the micro-incisions (3a) constituting the abovementioned series of micro-incisions (3) is at least equal to 50% of a height of the ground-contacting element (5).

10. Pneumatic tyre tread (1) according to any one of Claims 1 to 9, **characterised in that** all the abovementioned plurality of incision elements are the abovementioned micro-incisions (3a).

11. Pneumatic tyre tread (1) according to any one of Claims 1 to 9,**characterised in that** the abovementioned plurality of incision elements includes the abovementioned series of micro-incisions (3) and one or a plurality of narrow incisions (2),

and **in that** the abovementioned series of micro-incisions (3) is at least formed between the abovementioned one transverse edge (5a, 5b) and the abovementioned narrow incision (2) within the same ground-contacting element (5).

12. Pneumatic tyre tread (1) according to Claim 11, **characterised in that** the directions in which an imaginary straight lines connecting the two end portions (31, 32) of the micro-incisions (3a) constituting the abovementioned series of micro-incisions (3) extend are parallel to the mean direction in which the abovementioned narrow incisions (2) present within the same ground-contacting element (5) extend.

13. Pneumatic tyre **characterised in that** it has a tread (1) according to any one of Claims 1 to 12.

**Patentansprüche**

1. Luftreifen-Lauffläche (1) mit zumindest einer umlaufenden Rille (4a), die sich in Umfangsrichtung des Reifens erstreckt, einer Mehrzahl Querrillen (4b), die sich in Querrichtung zum Reifen erstrecken, einer Mehrzahl von erdberührenden Elementen (5), die von den umlaufenden Rillen (4a) und den Querrillen (4b) demarkiert sind, Querkanten (5a, 5b), die in den oben genannten erdberührenden Elementen (5) vermittels der oben genannten Querrillen (4b) und umlaufenden Kanten (5c, 5d) ausgebildet sind, die in den oben genannten erdberührenden Elementen (5) vermittels der oben genannten umlaufenden Rillen (4a) ausgebildet sind,
einer Mehrzahl von Einschnittelementen, die in den oben genannten erdberührenden Elementen (5) ausgebildet sind, wobei die Einschnittelemente zumindest eine Reihe von Mikroeinschnitten (3) enthalten, die zumindest zwei Mikroeinschnitte (3a) umfassen,
wobei die Mikroeinschnitte (3a), die oben erwähnte Reihe von Mikroeinschnitten (3) bilden, einen bogenförmigen Abschnitt (33) und zwei Endabschnitte (31, 32) haben, die in der erdberührenden Fläche des oben erwähnten Profils (1) ausgebildet sind, dies zumindest, wenn der Reifen neu ist, und in eine Breite E in der erdberührenden Fläche des oben erwähnten Profils (1) öffnen und sich so erstrecken, dass sie sich in keiner der oben angeführten umlaufenden Rillen (4a) oder den oben erwähnten Querrillen (4b) öffnen,
wobei die oben erwähnte Reihe von Mikroeinschnitten (3) zumindest in einem Bereich ausgebildet ist, der sich von einer Querkante (5a, 5b) des oben erwähnten erdberührenden Elements (5) erstreckt und eine Länge hat, die 25 % der Hauptlänge des erdberührenden Elements (5) ausmacht, die in einer Richtung parallel zur mittleren Richtung gemessen wird, in der sich die oben erwähnten umlaufenden Kanten (5c, 5d) im oben erwähnten erdberührenden Element (5) erstrecken,
wobei eine der oben erwähnten Reihen von Mikroeinschnitten (3) von unter der Mehrzahl Einschnittelemente, die im oben angeführten gleichen erdberührenden Element (5) ausgebildet sind, so ausgebildet sind, dass sie in engster Nähe zur Querkante (5a, 5b) sind,
die Mikroeinschnitte (3a), die die oben erwähnte Reihe von Mikroeinschnitten (3) bilden, eine Einschnittlänge von höchstens gleich 3,0 mm haben,
das Profil **dadurch gekennzeichnet ist, dass** die Länge der erdberührenden Fläche zwischen den beidseitig nächsten Teilen von Mikroeinschnitten (3a) innerhalb des gleichen erdberührenden Elements (5), die die oben erwähnte Reihe von Mikroeinschnitten (3) bildet, mindestens gleich 0,2 mm und höchstens gleich 1,2 mm beträgt.

2. Luftreifen-Lauffläche (1) nach Anspruch 1, **dadurch gekennzeichnet, dass** die Richtungen, in denen sich imaginäre gerade Linien erstrecken, die die beiden Endabschnitte (31, 32) der Mikroeinschnitte (3a) verbinden, die die oben erwähnte Reihe von Mikroeinschnitten (3) bilden, parallel zur Richtung sind, in der sich die oben erwähnte der Querkanten (5a, 5b) für alle Mikroeinschnitte (3a) in der Reihe von Mikroeinschnitten (3) im gleichen erdberührenden Element (5) erstreckt.

3. Luftreifen-Lauffläche (1) nach Anspruch 1 oder Anspruch 2, **dadurch gekennzeichnet, dass** die Richtungen, in denen sich eine imaginäre gerade Linie erstreckt, die die beiden Endabschnitte (31, 32) der Mikroeinschnitte (3a) verbindet, die die oben erwähnte Reihe von Mikroeinschnitten (3) bildet, parallel zueinander für alle Mikroeinschnitte (3a) in der Reihe von Mikroeinschnitten (3) im gleichen erdberührenden Element (5) sind.

4. Luftreifen-Lauffläche (1) nach einem beliebigen der vorstehenden Ansprüche 1 bis 3, **dadurch gekennzeichnet, dass** die oben erwähnte Einschnittlänge und der Radius des Bogens im oben erwähnten bogenförmigen Abschnitt (33) in den Mikroeinschnitten (3a), die die oben erwähnte Reihe von Mikroeinschnitten (3) bilden, der folgenden Beziehung entsprechen

$$(5 \times \text{Einschnittlänge}) - (3 \times \text{Radius des Bogens}) \geq 3 \ (\text{Einheiten: mm}).$$

5. Luftreifen-Lauffläche (1) nach einem beliebigen der vorstehenden Ansprüche 1 bis 4, **dadurch gekennzeichnet, dass** die oben erwähnte Einschnittlänge und die Breite E auf der oben erwähnten Profilfläche in den Mikroeinschnitten (3a), die die oben erwähnte Reihe von Mikroeinschnitten (3) bilden, der folgenden Beziehung entsprechen

$$\text{Einschnittlänge} / \text{Breite E} \geq 4.$$

6. Luftreifen-Lauffläche (1) nach einem beliebigen der vorstehenden Ansprüche 1 bis 5, **dadurch gekennzeichnet, dass** eine erste projizierte Länge der Mikroeinschnitte (3a), die die oben erwähnte Reihe von Mikroeinschnitten (3) bilden, projiziert auf eine Ebene parallel zur Drehrichtung des Reifens und senkrecht zur oben erwähnten erdberührenden Fläche kürzer ist, als eine zweite projizierte Länge, die auf eine Ebene parallel zur Drehachse des Reifens und senkrecht zur erdberührenden Fläche projiziert wird.

7. Luftreifen-Lauffläche (1) nach einem beliebigen der vorstehenden Ansprüche 1 bis 6, **dadurch gekennzeichnet, dass** die Breite E der Mikroeinschnitte (3a), die die oben erwähnte Reihe von Mikroeinschnitten (3) bilden, höchstens gleich 0,6 mm beträgt.

8. Luftreifen-Lauffläche (1) nach einem beliebigen der vorstehenden Ansprüche 1 bis 7, **dadurch gekennzeichnet, dass** der Radius des Bogens im oben erwähnten bogenförmigen Abschnitt (33) der Mikroeinschnitte (3a), die die oben erwähnte Reihe von Mikroeinschnitten (3) bilden, höchstens gleich 3,0 mm beträgt.

9. Luftreifen-Lauffläche (1) nach einem beliebigen der vorstehenden Ansprüche 1 bis 8, **dadurch gekennzeichnet, dass** eine Tiefe der Mikroeinschnitte (3a), die die oben erwähnte Reihe von Mikroeinschnitten (3) bilden, mindestens gleich 50 % einer Höhe des erdberührenden Elements (5) beträgt.

10. Luftreifen-Lauffläche (1) nach einem beliebigen der vorstehenden Ansprüche 1 bis 9, **dadurch gekennzeichnet, dass** die gesamte oben erwähnte Mehrzahl von Einschnittelementen die oben erwähnten Mikroeinschnitte (3a) sind.

11. Luftreifen-Lauffläche (1) nach einem beliebigen der vorstehenden Ansprüche 1 bis 9, **dadurch gekennzeichnet, dass** die oben erwähnte Mehrzahl von Einschnittelementen die oben erwähnte Reihe von Mikroeinschnitten (3) und einen oder eine Mehrzahl von schmalen Einschnitten (2) umfasst,
und dadurch, dass die oben erwähnte Reihe von Mikroeinschnitten (3) zumindest zwischen der oben erwähnten einen Querkante (5a, 5b) und dem oben erwähnten schmalen Einschnitt (2) im gleichen erdberührenden Element (5) ausgebildet ist.

12. Luftreifen-Lauffläche (1) nach Anspruch 11, **dadurch gekennzeichnet, dass** die Richtungen, in denen sich eine imaginäre gerade Linie erstreckt, die die beiden Endabschnitte (31, 32) der Mikroeinschnitte (3a) verbindet, die die oben erwähnte Reihe von Mikroeinschnitten (3) bilden, parallel zur mittleren Richtung sind, in der sich die oben erwähnten schmalen Einschnitte (2), die im gleichen erdberührenden Element (5) vorhanden sind, erstrecken.

**13.** Luftreifen, **dadurch gekennzeichnet, dass** er eine Lauffläche (1) nach einem beliebigen der Ansprüche 1 bis 12 hat.

**Revendications**

**1.** Bande de roulement de pneumatique (1) ayant au moins une rainure circonférentielle (4a) s'étendant dans la direction circonférentielle du pneumatique, une pluralité de rainures transversales (4b) s'étendant dans la direction transversale du pneumatique, une pluralité d'éléments de contact avec le sol (5) délimités par les rainures circonférentielles (4a) et les rainures transversales (4b), des bords transversaux (5a, 5b) formés dans les éléments de contact avec le sol (5) mentionnés ci-dessus au moyen des rainures transversales (4b) mentionnées ci-dessus, et des bords circonférentiels (5c, 5d) formés dans les éléments de contact avec le sol (5) mentionnés ci-dessus au moyen des rainures circonférentielles (4a) mentionnées ci-dessus,
une pluralité d'éléments d'incision étant formés dans les éléments de contact avec le sol (5) mentionnés ci-dessus, les éléments d'incision comprenant au moins une série de micro-incisions (3) comprenant au moins deux micro-incisions (3a),
les micro-incisions (3a) constituant la série mentionnée ci-dessus de micro-incisions (3) ayant une partie arquée (33) et deux parties d'extrémité (31, 32) formées dans la surface de contact avec le sol de la bande de roulement (1) mentionnée ci-dessus, au moins lorsque la bande de roulement est neuve, et s'ouvrant sur une largeur E dans la surface de contact avec le sol de la bande de roulement (1) mentionnée ci-dessus, s'étendant de sorte qu'elles ne s'ouvrent pas dans les rainures circonférentielles (4a) mentionnées ci-dessus ni dans les rainures transversales (4b) mentionnées ci-dessus,
la série mentionnée ci-dessus de micro-incisions (3) étant formée au moins dans une région s'étendant à partir d'un bord transversal (5a, 5b) de l'élément de contact avec le sol (5) mentionné ci-dessus et ayant une longueur qui représente 25% de la longueur moyenne de l'élément de contact avec le sol (5) mesurée dans une direction parallèle à la direction moyenne dans laquelle les bords circonférentiels (5c, 5d) mentionnés ci-dessus s'étendent dans l'élément de contact avec le sol (5) mentionné ci-dessus,
l'une de la série mentionnée ci-dessus de micro-incisions (3) parmi la pluralité d'éléments d'incision formés dans le même élément de contact avec le sol (5) mentionné ci-dessus étant formée afin d'être le plus près du bord transversal (5a, 5b),
les micro-incisions (3a) constituant la série mentionnée ci-dessus de micro-incisions (3) ayant une longueur d'incision égale au maximum à 3,0 mm,
la bande de roulement étant **caractérisée en ce que** :

la longueur, dans le même élément de contact avec le sol (5), de la surface de contact avec le sol entre les parties mutuellement les plus proches de micro-incisions (3a) constituant la série mentionnée ci-dessus de micro-incisions (3), est au moins égale à 0,2 mm et au maximum égale à 1,2 mm.

**2.** Bande de roulement de pneumatique (1) selon la revendication 1, **caractérisée en ce que** les directions dans lesquelles des lignes droites imaginaires raccordant les deux parties d'extrémité (31, 32) des micro-incisions (3a) constituant la série de micro-incisions (3) mentionnée ci-dessus, s'étendent, sont parallèles à la direction dans laquelle un bord mentionné ci-dessus des bords transversaux (5a, 5b) s'étend, pour toutes les micro-incisions (3a) dans la série de micro-incisions (3) dans le même élément de contact avec le sol (5).

**3.** Bande de roulement de pneumatique (1) selon la revendication 1 ou la revendication 2, **caractérisée en ce que** les directions dans lesquelles des lignes imaginaires droites raccordant les deux parties d'extrémité (31, 32) des micro-incisions (3a) constituant la série mentionnée ci-dessus de micro-incisions (3) s'étendent, sont parallèles entre elles pour toutes les micro-incisions (3a) dans la série de micro-incisions (3) dans le même élément de contact avec le sol (5).

**4.** Bande de roulement de pneumatique (1) selon l'une quelconque des revendications 1 à 3, **caractérisée en ce que** la longueur d'incision mentionnée ci-dessus et le rayon d'arc dans la partie arquée (33) mentionnée ci-dessus, dans les micro-incisions (3a) constituant la série mentionnée ci-dessus de micro-incisions (3), satisfont la relation suivante :

```
(5 x longueur d'incision) - (3 x rayon d'arc) ≥ 3
(unités : mm).
```

**5.** Bande de roulement de pneumatique (1) selon l'une quelconque des revendications 1 à 4, **caractérisée en ce que** la longueur d'incision mentionnée ci-dessus et la largeur E sur la surface de bande de roulement mentionnée ci-dessus, dans les micro-incisions (3a) constituant la série mentionnée ci-dessus de micro-incisions (3), satisfont la relation suivante :

$$\text{longueur d'incision / largeur E} \geq 4.$$

6. Bande de roulement de pneumatique (1) selon l'une quelconque des revendications 1 à 5, **caractérisée en ce qu'**une première longueur en saillie des micro-incisions (3a) constituant la série mentionnée ci-dessus de micro-incisions (3), en saillie sur un plan parallèle à la direction de rotation du pneumatique et perpendiculaire à la surface de contact avec le sol mentionnée ci-dessus est plus courte qu'une seconde longueur en saillie faisant saillie sur un plan parallèle à l'axe de rotation du pneumatique et perpendiculaire à la surface de contact avec le sol.

7. Bande de roulement de pneumatique (1) selon l'une quelconque des revendications 1 à 6, **caractérisée en ce que** la largeur E des micro-incisions (3a) constituant la série mentionnée ci-dessus de micro-incisions (3) est au maximum égale à 0,6 mm.

8. Bande de roulement de pneumatique (1) selon l'une quelconque des revendications 1 à 7, **caractérisée en ce que** le rayon de l'arc dans la partie arquée (33) des micro-incisions (3a) constituant la série mentionnée ci-dessus de micro-incisions (3) est au maximum égale à 3,0 mm.

9. Bande de roulement de pneumatique (1) selon l'une quelconque des revendications 1 à 8, **caractérisée en ce qu'**une profondeur des micro-incisions (3a) constituant la série mentionnée ci-dessus de micro-incisions (3) est au moins égale à 50 % d'une hauteur de l'élément de contact avec le sol (5).

10. Bande de roulement de pneumatique (1) selon l'une quelconque des revendications 1 à 9, **caractérisée en ce que** la totalité de la pluralité d'éléments d'incision sont les micro-incisions (3a) mentionnées ci-dessus.

11. Bande de roulement de pneumatique (1) selon l'une quelconque des revendications 1 à 9, **caractérisée en ce que** la pluralité mentionnée ci-dessus d'éléments d'incision comprend la série mentionnée ci-dessus de micro-incisions (3) et une ou une pluralité d'incisions étroites (2),
et **en ce que** la série mentionnée ci-dessus de micro-incisions (3) est au moins formée entre le bord transversal (5a, 5b) mentionné ci-dessus et l'incision étroite (2) mentionnée ci-dessus dans le même élément de contact avec le sol (5).

12. Bande de roulement de pneumatique (1) selon la revendication 11, **caractérisée en ce que** les directions dans lesquelles des lignes droites imaginaires raccordant les deux parties d'extrémité (31, 32) des micro-incisions (3a) constituant la série mentionnée ci-dessus de micro-incisions (3) s'étendent, sont parallèles à la direction moyenne dans laquelle les incisions étroites (2) mentionnées ci-dessus présentes dans le même élément de contact avec le sol (5) s'étendent.

13. Pneumatique **caractérisé en ce qu'**il a une bande de roulement (1) selon l'une quelconque des revendications 1 à 12.

[Figure 1]

# FIG.1

[Figure 2]

# FIG.2

(a)

(b)

(c)

[Figure 3]

# FIG.3

[Figure 4]

# FIG.4

[Figure 5]

# FIG.5

(a)

4a

51

4b

(b)

4a

51

4b

(c)

5

51

4a

4b

**EP 2 765 012 B1**

**REFERENCES CITED IN THE DESCRIPTION**

**Patent documents cited in the description**

- JP 62055202 A
- JP 2007210534 A
- JP 2005186827 A
- JP 2002187413 A